# EUROPEAN PATENT SPECIFICATION

(11) **EP 1 459 039 B1**
(45) Date of publication and mention of the grant of the patent: **01.09.2010**
(21) Application number: 02787458.5
(22) Date of filing: 18.12.2002
(51) Int. Cl.: G01F 1/84

(54) **CORIOLIS MASS FLOWMETER AND METHOD FOR MEASURING MASS FLOW**
CORIOLISMASSENSTRÖMUNGSMESSER UND VERFAHREN ZUR MESSUNG EINER MASSENSTRÖMUNG
DEBITMETRE MASSIQUE CORIOLIS ET PROCEDE DE MESURE DU DEBIT MASSIQUE

(30) Priority: 29.12.2001 DK 200101968
(43) Date of publication of application: 22.09.2004
(73) Proprietor: Siemens Flow Instruments A/S, 6430 Nordborg (DK)
(72) Inventor: HANSEN, Henning, Max, DK-6400 Sonderborg (DK)
(74) Representative: Maier, Daniel Oliver
(86) International application number: PCT/DK2002/000868
(87) International publication number: WO 2003/056282

(56) References cited:
- EP-A- 0 246 510
- US-A- 4 781 069
- US-A- 5 969 264
- US-B1- 6 308 580
- US-B1- 6 318 186

## Description

The invention concerns a mass flowmeter operating according to the known Coriolis principle with at least two oscillating tubes where each tube has an inlet side and an outlet side. An actuator brings the tubes to oscillate on the measuring frequency and two detectors, also called pickups, measure the oscillation of the tubes on the inlet side and outlet side. The signals from the two pickups are conducted to a signal processing unit where the phase difference between the two signals is determined and which is an expression of the mass flow through the tubes, as the signal from the pickup that is mounted on the inlet side of the oscillating tubes will be delayed proportionally to the flow in relation to the signal on the outlet side. Further, after amplification and conditioning, the two signals are used to drive said actuator in a way that an oscillation with a constant amplitude on the chosen natural frequency of the tube is obtained. A mass flowmeter of that kind is described in EP 0 359 294 where the two pickups measure the differential movement between the oscillating tubes. The pickups are realised by placing a magnet on the one tube and a coil on the other tube so that a relative movement between the two tubes induces a voltage in the coil. A drawback with this principle is that the cables to the coil are either to be mounted on the oscillating tubes or they are mounted in a way that they are vibrating at one end and are fastened at the other end. The first solution with cables mounted on the oscillating tube is cumbersome in manufacturing as the cables must be fastened to the tube all the way in order to avoid fatigue failure. Moreover, parts of the conductor that are not mounted firmly would cause losses which again affects the measuring accuracy. This is especially the case where the tube dimensions are small. The second solution to the problem of cabling is described in US 4,876,898 and here the cables from the oscillating tubes are led to the non-oscillating parts by designing a part of the cables as curved springs which - isolated from the chassis - are mounted in the one end of the vibrating tubes and in the other end on non-oscillating chassis parts. This solution is well-suited for large tubes, however, for small tubes the losses will easily become to heavy or the springs become very small, vulnerable and difficult to mount.

Thus, in WO 97/26508 a method is described which avoid these cables. Here, both oscillating tubes are provided with magnets and the coils are placed on the chassis. The two coils that senses the movements of the inlet sides in relation to the chassis are connected in series and give a common signal which is in practice proportional to the relative movement of the two tubes. The two coils that senses the movement of the outlet sides are also connected in series and give a signal which in practice is proportional to the relative movement of the outlet sides. As the coils and the corresponding magnets are never completely identical, the given signals will not only be a result of the relative movement of the tubes but they will also include a contribution that is caused by the absolute movement of the tubes in relation to the chassis. Hence, a fluid flowing through one of the tubes will effect the phase shift more or less than a fluid flowing through the other tube, depending on the difference in sensitivity of the corresponding coils and magnets. However, it is of no importance for the described flowmeter as the two oscillating tubes are connected in series and are even unbroken tubes. However, if it is desired to have the two oscillating tubes connected in parallel, there is no guarantee that the flow in one tube is constant in relation to the other tube. There may be deposits or inlet flow profiles which changes the ratio of flow in one tube to the flow in the other tube. This ratio will thus change the total sensitivity if the pickups on the inlet side do not mutually have the same sensitivity, and this is also the case for the outlet side.

Based on the above the object is to design a mass flowmeter based on the Coriolis principle which exhibits reduced sensitivity to a common mode oscillation of the tubes.

The object is solved with a mass flowmeter operating according to the Coriolis principle and which contains two tubes that are mechanically connected to each other by means of plates, where on or in the plates means for measuring a change in longitudinal length of the plates are placed.

In measuring the relative longitudinal change of length of the plates and using these signals for calculating the mass flow, the sensitivity towards common mode oscillation of the tubes is reduced considerably. The advantage of measuring the elongation or the deflection, respectively the velocity of deflection, on the plates is that the deflection is measured as the differential deflection between the two tubes whereby, as desired, it is of no importance in which tube the flow is. Another advantage obtained with the invention is that the measurements are performed without placing cables on the oscillating tubes or without using springs from the oscillating tubes.

A plate as referred to is normally placed in Coriolis mass flowmeters in order to separate the oscillation mode where the tubes oscillate in opposite direction from the oscillating mode where they oscillate in the same direction. In descriptions of Coriolis mass flowmeters the plate is called "brace bar", "mode separation plate" or "coupling plate". The separation of modes by the plate causes a lower coupling between the oscillation on the chosen natural frequency, where the tubes oscillate in opposite direction and the natural frequency of the mode, where the tubes oscillate in the same direction. Said lower coupling results in less energy loss to the surroundings and thereby sensitivity towards manufacturing tolerances and changes in the mounting of the flowmeter is reduced. Experience shows, that a coupling between the described modes cause problems with the accuracy at low flow. The plate works as a rigid spring which connects the two tubes and thereby the elongation of the plate is proportional to the relative movement between the two tubes. As the plate already is dimensioned in a way, that it has an absolute minimum weight, its relative elongation will be large which makes it well-suited for measuring.

In using a manifold that functions as a flow splitter the fluid is led into each tube which thereby gets an inlet side and an outlet side. The advantage of using a manifold is that the flowmeter only causes half the pressure loss and that the flow through the tubes will increase. By placing a plate on the inlet side and a plate on the outlet side and measuring longitudinal length change signals from the plates, as mentioned, a differential measurement on the inlet side of the two tubes and a corresponding differential measurement on the outlet side of the mass flowmeter can be done. The invention thus teaches a mass flowmeter with differential measurement of the oscillating tubes.

By placing an anchor between the manifold and the plates whereby the tubes are led through the anchor, a vibrational decoupling of the tubes in relation to the manifold is obtained. Decoupling is caused by the fact, that the anchor can be considered as having an infinite large mass and positioning of the plates are best defined in relation to the anchor.

In placing the plates in an optimum way on the tubes, proportionality between the relative oscillation of the tubes and the change in longitudinal length of the plates is realized. This can e.g. be achieved by placing the plates perpendicular on the tubes. The plates are preferably placed on tube sections where the inlet side of the tubes is parallel with the outlet side of the tubes.

Moreover, the plates are **characterized in that** they are placed in nodes of the oscillating mode having a natural frequency which is chosen as working frequency. It this way a plate in practice is stationary in relation to chassis, i.e. essentially the anchor, and the cable connections for the measuring means referred to can be led without using the above mentioned fastened cables or springs.

The plates are usually made of steel, however, they can be made of for example an injection moulded synthetic material, which has the means for measuring the elongation integrated and where the conductors are made accessible from the outside. Alternatively, the measuring means can be placed on the synthetic plate.

The use of strain gauges in mass flowmeters which make use of the Coriolis principle is known from for example US 4,691,578. However, here these sensors are mounted on the tubes which results in the same drawback as mentioned before: if the sensitivity of the two strain gauges is not identical, a change in the flow distribution between the two tubes would cause a change of sensitivity of the flowmeter. This type of sensors, whose resistance defined output signal in a known way changes at longitudinal length changes can for example be realised as a Wheatstonebridge.

A disadvantage in using strain gauges compared to the widely used electromagnetic pickups is that strain gauges need a voltage supply in order to function. If the necessary voltage is not available, for example because the number of cables to the detector is limited, another type of detectors, namely piezoceramic pickups can be used instead of strain gauges and be mounted in the same way and in the same place. When mechanically deformed the piezoceramic pickup generates a signal which can be used as an expression for the change in longitudinal length of a plate. The advantage with piezoceramic pickups is a typically higher temperature range and further they yield a voltage without the need of an extra power supply. On the other hand, strain gauges give a more robust signal and there are also methods for producing strain gauges for high temperature.

Moreover, the object is solved with a method for measuring the mass flow by means of a flowmeter based on the Coriolis principle where the flowmeter comprises at least two tubes through which a fluid is flowing and where the tubes are exited by an oscillator and oscillate at a frequency close to one of the natural frequencies. Each tube has an inlet side and an outlet side, and the phase difference between the oscillations on the inlet side and the outlet side is used as an expression for the mass flow in the tubes. The method is **characterized in that** on the inlet side a signal is measured which is proportional to the change in longitudinal length of a plate that connects the tubes on the inlet side, and that on the outlet side a signal is measured, which is proportional to a change in longitudinal length of a plate that connects the tubes on the outlet side.

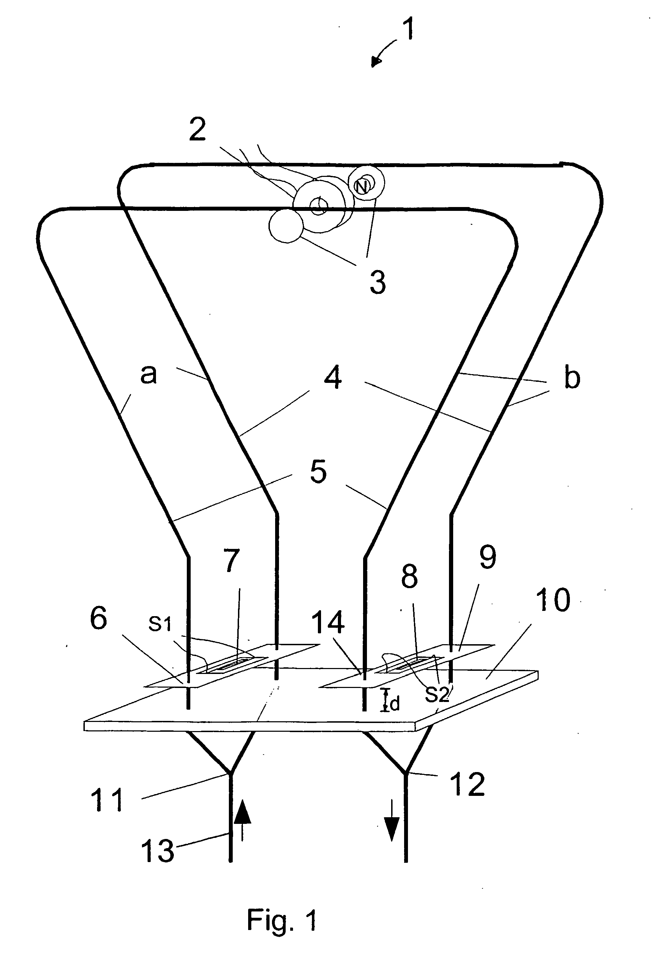

Below is a description of the preferred embodiment based on Figure 1 which shows the essential parts of a mass flowmeter 1.

Two tubes 4 and 5 which are bend as is shown in Figure 1 are brought to oscillate on their natural frequency by means of an actuator which consists of a coil 2 and two magnets 3. The tubes are fastened to an anchor 10 which again is fastened to a possible housing. On the inlet side a the two tubes are connected to an inlet tube 13 via a manifold 11 (flow splitter) where the flow is divided into two approximately equal streams. On the outlet side b the tubes are connected via a manifold 12 where the two flows are reunited. Besides being connected to the anchor 10 the tubes on the inlet side are connected to a common plate 6 and on the outlet side to a common plate 9. The plates 6 and 9 each have a strain gauge 7 and 8 mounted which is fixedly glued. Alternatively a piezoceramic pickup is mounted correspondingly. The plates are placed perpendicular to the tubes and are preferably made of stainless steel having a thickness of ½ - 1 mm dependent on the size of the flowmeter. The plates are rectangular (4cm x 2cm) as shown in the Figure but may have another shape. The essential point is that the plate mechanically connects the two tubes.

The mass flowmeter works as follows. Driven by the actuator 2,3 the tubes oscillate on the natural frequency of one of the tubes in a way that the total momentum is minimal. The two tubes are brought to oscillate in counter phase, i.e. they move away from each other and thereafter towards each other, and the fluid flows through the manifold 11, divides equally in the tubes 4 and 5 and continues out after being reunited at the manifold 12. The tube oscillations on the inlet side a as compared to the outlet side b are now lagging in phase angle due to momentum moved by the fluid. The plates 6 and 9 are exposed to a phase shifted mechanical pull which elongates the plates a bit. Hereby the signals S1 and S2 - which mainly represent the resulting pull in the tubes due to the Coriolis force - from the two strain gauges 7 and 8 will be phase shifted and thus shifted in time. The time shift is proportional to the mass flow. Calculation of the mass flow is executed by a signal conditioning unit which receives the electrical signals from the strain gauges.

The signal S1 for the change in longitudinal length on the plate 6 on the inlet side represents a first difference while the signal S2 on the plate 9 on the outlet side represents a second difference. Based on these two differences a third difference is calculated which is used as an expression of the mass flow.

The signals from the two strain gauges 7 and 8 can be amplified and are used for driving the oscillations of the tubes via the coil 2 and the magnets 3. In order that the phase angle of the signal to the coil is in phase with the velocity of the tubes, the phase of the signal from the strain gauges is to be shifted 90° in relation to the deflection. This phase shift can be done in two ways, either by differentiating the signal or by integrating the signal.

By integrating the signal an advantage is obtained in that low frequency signals are amplified more than high frequency signals and thereby it is avoided, what is often the case, that the tube is brought to oscillate on high frequency resonances instead of the chosen fundamental frequency.

In the Figure is shown that the plate 9 is placed at a distance d to the anchor 10. The distance d has been chosen so that the plate 9 is placed exactly above an oscillating node 14 being a place where the tubes 4 and 5 practically stand still in relation to the anchor 10.

The signal from a piezoceramic plate can be used directly after amplification if the current is considered as the signal and the input impedance of the amplifier is small. As the piezoceramic gives an electrical charge when it is deformed, the current will be an expression of the speed of deformation.

The plates 6 and 9 can be manufactured in hard synthetic material and have either strain gauges or piezoceramic meters embedded in the synthetic material with conductors led out, or the meters can be fastened to the upper side of the plate of synthetic material.

The invention is described as making use of bend tubes 4 and 5, however, straight tubes can be used which in a known way are guided in parallel from inlet to outlet.

## Claims

1. Mass flowmeter operating according to the Coriolis principle where the flowmeter comprises two tubes (4,5) mechanically connected to each other by means of plates ***characterized in* that** means (7,8) are placed in or on at least two plates (6,9) for measuring a change in longitudinal length of the plates.

2. Mass flowmeter according to claim 1 where a fluid via one or several manifolds (11,12) is led to or carried away from the tubes, where each tube has an inlet side (a) and an outlet side (b) and where a signal (S1) representing a change of longitudinal length on a plate (6) which connects the tubes on the inlet side, and a signal (S2) representing a change of longitudinal length on a plate (9) that connects the tubes on the outlet side is measured.

3. Mass flowmeter according to claim 2 ***characterized in* that** an anchor (10) is placed between manifold (11,12) and plates (6,9).

4. Mass flowmeter according to claim 2 ***characterized in* that** the first and the second plate are fastened to the tubes in a way that the mechanical change in longitudinal length in each of the plates is proportional to the relative movement between the tubes (4,5).

5. Mass flowmeter according to claim 4 ***characterized in* that** the first and the second plate are fastened on the tubes in places (14) which correspond to a node of the oscillation that has been chosen as the working frequency of the flowmeter.

6. Mass flowmeter according to claim 1 ***characterized in* that** the first and the second plate (6,9) consist of a hard synthetic material.

7. Mass flowmeter according to claims 1 or 2 ***characterized in* that** the means for measuring the change in longitudinal length are one or more strain gauges (7,8).

8. Mass flowmeter according to claims 1 or 2 ***characterized in* that** means for measuring the change in longitudinal length are one or more piezoelectric pickups.

9. Mass flowmeter according to claim 1 **characterized in that** a difference signal between a signal (S1) from the one plate (6) and a signal (S2) from the other plate (9) is used for calculation of the mass flow.

10. Method for measuring mass flow by means of a flowmeter based on the Coriolis principle where the flowmeter (1) comprises at least two tubes (4,5) having a fluid flowing through and where the tubes are exited by an oscillator (2,3) and oscillate at a frequency close to one of the natural frequencies and where each of the tubes has an inlet side and an outlet side and where the phase difference between the oscillations of the inlet side and the outlet side are used as an expression of the mass flow in the tubes ***characterized in* that** on the inlet side (a) a signal (S1) is measured which is proportional to a change in longitudinal length of a plate (6) which connects the tubes on the inlet side, and that a signal (S2) on the outlet side (b) is measured which is proportional to a change in longitudinal length of a plate (9) which connects the tubes on the outlet side (b).

11. Method according to claim 10 **characterized in that** the signals (S1,S2) are differentiated or integrated.

## Patentansprüche

1. Massendurchflussmesser, der nach dem Coriolis-Prinzip arbeitet, wobei der Durchflussmesser zwei Rohre (4, 5) umfasst, die über Platten mechanisch miteinander verbunden sind, **dadurch gekennzeichnet, dass** in oder an mindestens zwei Platten (6, 9) Mittel (7, 8) angebracht sind, die eine Veränderung der Länge der Platten messen.

2. Massendurchflussmesser nach Anspruch 1, bei dem ein Fluid über eine oder mehrere Sammelleitungen (11, 12) zu den Rohren hin oder von ihnen weg geleitet wird, wobei jedes Rohr eine Einlassseite (a) und eine Auslassseite (b) aufweist und ein Signal (S1), das eine Veränderung der Länge an einer Platte (6) repräsentiert, die die Rohre auf der Einlassseite miteinander verbindet, sowie ein Signal (S2), das eine Veränderung der Länge an einer Platte (9) repräsentiert, die die Rohre auf der Auslassseite miteinander verbindet, gemessen wird.

3. Massendurchflussmesser nach Anspruch 2, **dadurch gekennzeichnet, dass** zwischen der Sammelleitung (11, 12) und den Platten (6, 9) eine Verankerung (10) angeordnet ist.

4. Massendurchflussmesser nach Anspruch 2, **dadurch gekennzeichnet, dass** die erste und die zweite Platte auf eine solche Weise an den Rohren befestigt sind, dass die mechanische Veränderung der Länge bei jeder der Platten proportional zur relativen Bewegung der Rohre (4, 5) gegeneinander ist.

5. Massendurchflussmesser nach Anspruch 4, **dadurch gekennzeichnet, dass** die erste und die zweite Platte an Stellen (14) an den Rohren befestigt sind, die einem Knoten der Schwingung entsprechen, die als Arbeitsfrequenz des Durchflussmessers gewählt wurde.

6. Massendurchflussmesser nach Anspruch 1, **dadurch gekennzeichnet, dass** die erste und die zweite Platte (6, 9) aus einem harten Kunststoffmaterial bestehen.

7. Massendurchflussmesser nach Anspruch 1 oder 2, **dadurch gekennzeichnet, dass** es sich bei dem Mittel zum Messen der Veränderung der Länge um einen oder mehrere Dehnungsmessstreifen (7, 8) handelt.

8. Massendurchflussmesser nach Anspruch 1 oder 2, **dadurch gekennzeichnet, dass** es sich bei dem Mittel zum Messen der Veränderung der Länge um einen oder mehrere Piezoaufnehmer handelt.

9. Massendurchflussmesser nach Anspruch 1, **dadurch gekennzeichnet, dass** ein Differenzsignal zwischen einem Signal (S1) von der einen Platte (6) und einem Signal (S2) von der anderen Platte (9) für die Berechnung des Massendurchflusses verwendet wird.

10. Verfahren zum Messen des Massendurchflusses mit Hilfe eines auf dem Coriolis-Prinzip basierenden Durchflussmessers, wobei der Durchflussmesser (1) mindestens zwei Rohre (4, 5) umfasst, durch die ein Fluid strömt, wobei die Rohre von einem Oszillator (2, 3) erregt werden und mit einer Frequenz schwingen, die in der Nähe einer der Eigenfrequenzen liegt, und wobei jedes Rohr eine Einlass- und eine Auslassseite aufweist und wobei die Phasendifferenz zwischen den Schwingungen der Einlassseite und der Auslassseite als Ausdruck des Massendurchflusses in den Rohren verwendet werden, **dadurch gekennzeichnet, dass** auf der Einlassseite (a) ein Signal (S1) gemessen wird, das proportional zu einer Veränderung der Länge einer Platte (6) ist, die die Rohre auf der Einlassseite miteinander verbindet, und auf der Auslassseite (b) ein Signal (S2) gemessen wird, das proportional zu einer Veränderung der Länge einer Platte (9) ist, die die Rohre auf der Auslassseite (b) miteinander verbindet.

11. Verfahren nach Anspruch 10, **dadurch gekennzeichnet, dass** die Signale (S1, S2) differenziert oder integriert werden.

## Revendications

1. Débitmètre massique fonctionnant suivant le principe de Coriolis, dans lequel le débitmètre comprend deux tubes ( 4, 5 ) reliés mécaniquement l'un à l'autre au moyen de plaques, **caractérisé en ce que** des moyens ( 7, 8 ) sont placés dans ou sur au moins deux plaques ( 6, 9 ) pour mesurer un changement de longueur longitudinale des plaques.

2. Débitmètre massique suivant la revendication 1, dans lequel un fluide est envoyé aux tubes par un ou par plusieurs collecteurs ( 11, 12 ) ou en est retiré, chaque tube ayant un côté ( a ) d'entrée et un côté ( b ) de sortie et un signal ( S1 ) représentant un changement de longueur longitudinale sur une plaque ( 6 ) qui relie les tubes du côté de l'entrée et un signal ( S2 ) représentant un changement de longueur longitudinale sur une plaque ( 9 ) qui relie les tubes du côté de la sortie sont mesurés.

3. Débitmètre massique suivant la revendication 2, **caractérisé en ce qu'**une ancre ( 10 ) est placée entre le collecteur ( 11, 12 ) et les plaques ( 6, 9 ).

4. Débitmètre massique suivant la revendication 2, **caractérisé en ce que** la première et la deuxième plaques sont fixées aux tubes de façon à ce que le changement mécanique de longueur longitudinale de chacune des plaques soit proportionnel au mouvement relatif entre les tubes ( 4, 5 ).

5. Débitmètre massique suivant la revendication 4, **caractérisé en ce que** la première et la deuxième plaques sont fixées sur les tubes en des emplacements ( 14 ) qui correspondent à un noeud de l'oscillation qui a été choisie comme la fréquence de travail du débitmètre.

6. Débitmètre massique suivant la revendication 1, **caractérisé en ce que** la première et la deuxième plaques ( 6, 9 ) sont en une matière synthétique dure.

7. Débitmètre massique suivant la revendication 1 ou 2, **caractérisé en ce que** les moyens de mesure du changement de la longueur longitudinale sont un ou plusieurs extensomètres ( 7, 8 ) .

8. Débitmètre massique suivant la revendication 1 ou 2, **caractérisé en ce que** les moyens de mesure du changement de la longueur longitudinal sont un ou plusieurs capteurs piézoélectriques.

9. Débitmètre massique suivant la revendication 1, **caractérisé en ce qu'**un signal de différence entre un signal ( S1 ) de l'une des plaques ( 6 ) et un signal ( S2 ) de l'autre plaque ( 9 ) est utilisé pour calculer le débit massique.

10. Procédé de mesure du débit massique au moyen d'un débitmètre reposant sur le principe de Coriolis dans lequel le débitmètre ( 1 ) comprend au moins deux tubes ( 4, 5 ) ayant un fluide qui y passe, dans lequel les tubes sont excités par un oscillateur ( 2, 3 ) et oscillent à une fréquence proche de l'une des fréquences naturelles et dans lequel chacun des tubes a un côté d'entrée et un côté de sortie et dans lequel la différence de phase entre les oscillations du côté de l'entrée et du côté de la sortie est utilisée comme une expression du courant massique dans les tubes, **caractérisé en ce que** l'on mesure, du côté ( a ) de l'entrée, un signal ( S1 ) qui est proportionnel à un changement de la longueur longitudinale d'une plaque ( 6 ) qui relie les tubes du côté de l'entrée et **en ce que** l'on mesure, du côté ( b ) de la sortie, un signal ( S2 ) qui est proportionnel à un changement de la longueur longitudinale d'une plaque ( 9 ) qui relie les tubes du côté ( b ) de la sortie.

11. Procédé suivant la revendication 10, **caractérisé en ce que** l'on différencie ou l'on intègre les signaux ( S1, S2 ).
